Europäisches Patentamt

European Patent Office

Office européen des brevets

(19)

(11) **EP 1 111 714 B1**

(12) **EUROPEAN PATENT SPECIFICATION**

(45) Date of publication and mention
of the grant of the patent:
**14.07.2004 Bulletin 2004/29**

(51) Int Cl.⁷: **H01Q 1/32**, H01Q 1/12,
G01S 13/93, G01S 7/40

(21) Application number: **00310862.8**

(22) Date of filing: **07.12.2000**

(54) **System for determining alignment of a directional radar antenna**

System zur Bestimmung der Ausrichtung einer gerichteten Radarantenne

Système pour déterminer l'alignement d'une antenne directionelle de radar

(84) Designated Contracting States:
**DE FR GB**

(30) Priority: **21.12.1999 US 468733**

(43) Date of publication of application:
**27.06.2001 Bulletin 2001/26**

(73) Proprietor: **Visteon Global Technologies, Inc.
Dearborn, Michigan 48126-2490 (US)**

(72) Inventor: **Sielagoski, Gerald L.
St. Clair Shores,MI 48080 (US)**

(74) Representative: **McLean, Robert Andreas et al
Dummett Copp,
25 The Square,
Martlesham Heath
Ipswich, Suffolk, IP5 3SL (GB)**

(56) References cited:
**EP-A- 0 905 526        DE-A- 19 707 590
US-A- 4 041 494        US-A- 5 977 906
US-A- 6 087 995**

• **GRACE M ET AL: "76GHZ RADAR ANTENNA
ALIGNMENT SYSTEM" 30TH EUROPEAN
MICROWAVE CONFERENCE PROCEEDINGS.
PARIS, OCT. 3 - 5, 2000, PROCEEDINGS OF THE
EUROPEAN MICROWAVE CONFERENCE,
LONDON: CMP, GB, vol. 3 OF 3 CONF. 30, 5
October 2000 (2000-10-05), pages 175-178,
XP001061004 ISBN: 0-86213-212-6**

## Description

Technical Field

The present invention relates generally to radar systems and, more particularly, to a system for determining alignment of a directional radar antenna.

Background Art

Radar systems are used to detect objects, and to determine distances, directions, and/or velocities. In motor vehicles, the uses for radar systems include spacing, collision warning, and automatic speed control. A basic characteristic common to all of these applications is that the radar system, or more precisely its directional antenna, must be adjusted to a desired principal beam direction. In the case of a motor vehicle application, the principal beam direction is often selected to be parallel to the travel axis of the vehicle. Because of installation and manufacturing tolerances or, for example, after an accident, adjustment must be possible even when the radar system is installed in a mount provided on the motor vehicle.

One possibility for achieving this object is to provide a mount for the radar system, or at least its directional antenna, which is modelled on a motor vehicle headlight suspension or mounting system. In this solution, the radar system or its directional antenna is attached at three points lying in a plane perpendicular to the principal beam direction, preferably in an L-shaped configuration with respect to one another. The two outer suspension points are thus offset in two directions with respect to one another. The two outer points each consist of a threaded rod equipped at one end with a ball head, the ball head allowing the threaded rod to move in a mount. The third, center, suspension point is also movably mounted by means of a ball head. However, this third suspension point generally does not have displacement capability in the form of a threaded rod or the like. Thus, when the radar system or its directional antenna is moved at one of the two-outer threaded rods, its principal beam direction tilts about an axis that is formed by the respective other two suspension points. The principal beam direction of the radar system can thus be adjusted, at two displacement screws or two threaded rods, in two directions (preferably horizontally and vertically) located perpendicular to one another. While this implementation works well, it can be improved upon.

It is characteristic of this solution that the adjustment apparatus be combined with the mechanical suspension of the radar system or its directional antenna. Accordingly, the adjustment apparatus must in each case be re-adapted to different installation environments, particularly in the case of a physically small radar system housed in its entirety in a housing, as is used predominantly in a motor vehicle. In some circumstances, not only the mechanical suspension system, but also the adjustment mechanism must be redesigned in each case. This means a considerable outlay for adapting an existing radar system to other vehicle models. Moreover an external adjustment apparatus of this kind, i.e., one located outside the compact housing, requires additional space for installation in a motor vehicle.

In the prior art, alignment of the directional antenna requires the attachment of an external device to the directional antenna. This external device must be attached to the directional antenna with a high degree of precision in order to insure proper alignment.

Thus, there exists a need to provide a means for directional antenna alignment without the need to attach an external device, which requires a high degree of precision in the attachment process.

DE 19707590A also discloses a directional antenna alignment system for a vehicle radar system.

Summary Of The Invention

It is an object of the invention to provide an improved and reliable means for determining alignment of a directional radar antenna. Another object of the invention is to eliminate the need for attaching an external device for antenna alignment.

In one preferred embodiment of the invention, a device for determining alignment of an antenna includes a directional radar antenna that generates a radiated signal and two receiving antennas. A first receiving antenna is located a first distance from the radar antenna and receives the radiated signal. A second receiving antenna is located a second distance from the radar antenna and a third distance from the first receiving antenna and also receives the radiated signal. If the distances between the radar antenna and the first and second receiving antennas are different, then there will be a phase difference and/or an amplitude difference between the signal received by the first receiving antenna and the signal received by the second receiving antenna. A controller is coupled to both the first and second receiving antennas and determines the phase difference and/or the amplitude difference between those signals. Using this phase difference, the directional radar antenna can be positioned until the phase difference is eliminated, at which point the directional radar antenna is centered between the two antennas. The amplitude difference may then be used to adjust the directional radar antenna until the amplitude difference is eliminated, at which point the directional radar antenna is aligned.

In a second preferred embodiment, a third receiving antenna is added to the first preferred embodiment to allow for alignment in a second plane.

The present invention achieves an improved and reliable means for determining alignment of a directional radar antenna. Also, the present invention is advantageous in that it eliminates the need for attaching an external device, which requires a high degree of precision in the attachment process.

Additional advantages and features of the present invention will become apparent from the description that follows, and may be realized by means of the instrumentalities and combinations particularly pointed out in the appended claims, taken in conjunction with the accompanying drawings.

Brief Description of the Drawings

In order that the invention may be well understood, there will now be described some embodiments thereof, given by way of example, reference being made to the accompanying drawings, in which:

Figure 1 is a plan view of a vehicle directional antenna alignment system according to one preferred embodiment of the present invention;

Figure 2 is a schematic of a device for determining alignment of an antenna according to one preferred embodiment of the present invention; and

Figure 3 is a perspective view of a device for determining alignment of an antenna according to one preferred embodiment of the present invention.

Detailed Description

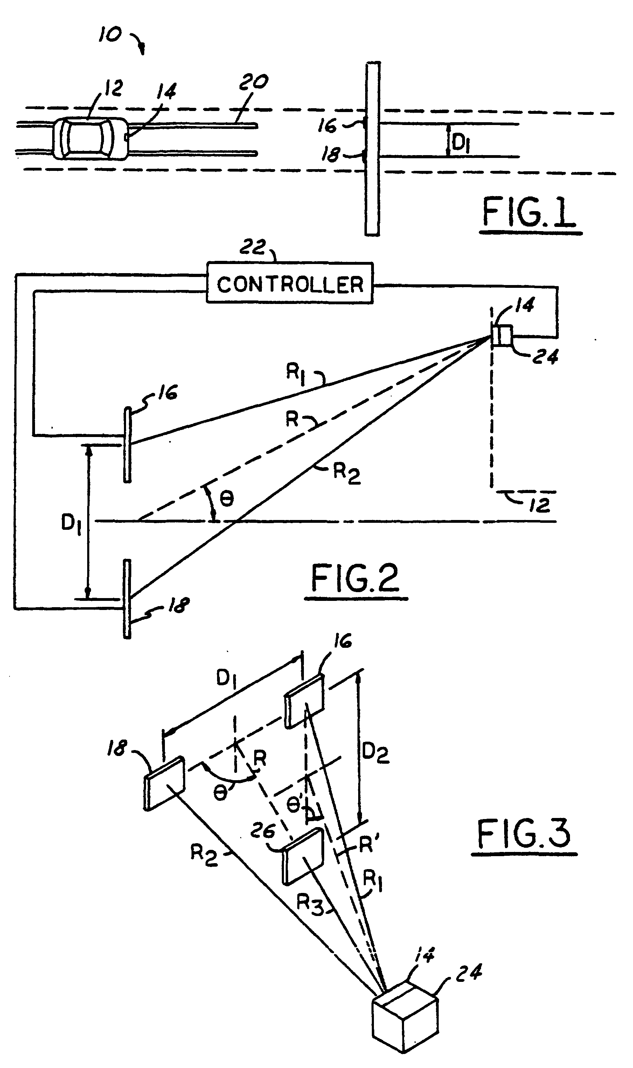

Referring to Figure 1, a plan view of a vehicle directional antenna alignment system 10 according to one preferred embodiment of the present invention is illustrated. The vehicle directional antenna alignment system 10 is comprised of a radiating energy source 14 located on a vehicle 12, a first receiving antenna 16 and a second receiving antenna 18. The vehicle 10 may be positioned on an alignment mark 20, such as paint strips or tracks, so that radiating energy source 14 is approximately centered between first receiving antenna 16 and second receiving antenna 18.

Referring to Figure 2, a schematic of a device for determining alignment of an antenna 14 according to one preferred embodiment of the present invention is illustrated. Radiating energy source 14 is located in vehicle 12 and is approximately centered between first receiving antenna 16 and second receiving antenna 18. In the present invention, radiating energy source 14 is a directional radar antenna, but one skilled in the art would realize that other radiating sources might be used. Radiating energy source 14 is pointed toward first receiving antenna 16 and second receiving antenna 18 at distances $R_1$ and $R_2$ respectively. Both antennas are located in a plane perpendicular to radiating energy source 14. Radiating energy source 14 generates a radiated signal having a wavelength $\lambda$. Radiating energy source 14 is also coupled to adjusting device 24, which may be used to adjust the position of source 14.

First receiving antenna 16 and second receiving antenna 18 are separated by a third distance $D_1$, which is small compared with the distance to the radiating energy source 14. First receiving antenna 16 and second receiving antenna 18 may be mounted horizontally for alignment in the azimuth plane or vertically for alignment in the elevation plane. Alternatively, a third receiving antenna 26 (best seen in Figure 3) may be added horizontally or vertically at a fifth distance $D_2$ to allow simultaneous alignment in both planes.

First receiving antenna 16 is located a first distance $R_1$ and receives the radiated signal from radiating energy source 14. When the radiated signal reaches first receiving antenna 16, it has an associated first phase $F_1$ and an associated first amplitude. The first distance $R_1$ can be determined by the equation;

$$R_1 = R - (D_1/2)\sin \theta$$

or;

$$R_1 = F_1\lambda/2\Pi$$

where $\lambda$ equals the wavelength of the radiated signal and R equals the distance and $\theta$ equals the angle between source 14 and perpendicular bisector of the line separating first receiving antenna 16 and second receiving antenna 18.

Second receiving antenna 18 is located a second distance $R_2$, and receives the radiated signal, from radiating energy source 14. When the radiated signal reaches second receiving antenna 18, it has an associated second phase $F_2$ and an associated second amplitude. The second distance $R_2$ can be determined by the equation;

$$R_2 = R + (D_1/2) \sin \theta$$

or;

$$R_2 = F_2\lambda/2\Pi$$

where $\lambda$ equals the wavelength of the radiated signal and R equals the distance and $\theta$ equals the angle between source 14 and perpendicular bisector of the line separating first receiving antenna 16 and second receiving antenna 18.

Referring to Figure 3, a perspective view of a device for determining alignment of an antenna according to one preferred embodiment of the present invention is illustrated. Third receiving antenna 26 is located a fourth distance $R_3$, and receives the radiated signal, from radiating energy source 14. When the radiated signal reaches third receiving antenna 26, it has an associated third phase $F_3$ and an associated third amplitude.

The fourth distance $R_3$ can be determined by the equation;

$$R_3 = R' + (D_2/2)\sin \theta'$$

or;

$$R_3 = F_3\lambda/2p$$

where $\lambda$ equals the wavelength of the radiated signal and $R'$ equals the distance and $\theta'$ equals the angle between source 14 and the perpendicular bisector of the line separating first receiving antenna 16 and third receiving antenna 26.

Controller 22 is coupled to first receiving antenna 16, second receiving antenna 18, the third receiving antenna, and adjusting device 24. Controller 22 has control logic operative to determine an amplitude difference and a phase difference $\Delta F$ between the signal received by first receiving antenna 16 and second receiving antenna 18, shown by;

$$\Delta F = (F_2 - F_1) = (2\Pi/\lambda)d \cdot \sin \theta$$

The phase difference is used to determine the angle, $\theta$, between energy radiation source 14 and the perpendicular bisector of the line separating first receiving antenna 16 and second receiving antenna 18. The radiating energy source 14 is then adjusted, either manually, or by controller 22 controlling adjusting device 24, so that the first phase equals the second phase and the first amplitude equals the second amplitude, at which point $R_1=R_2$ and source 14 is aligned.

Similarly, if third receiving antenna 26 is used, then controller 22 has control logic operative to determine an amplitude difference and a phase difference between the signal received by first receiving antenna 16 and the third receiving antenna 26. The phase difference is used to determine the angle between energy radiation source 14 and the perpendicular bisector of the line separating first receiving antenna 16 and the third receiving antenna 26. The radiating energy source 14 is then adjusted, either manually, or by controller 22 controlling adjusting device 24, so that the first phase equals the third phase and the first amplitude equals the third amplitude, at which point $R_1=R_3$ and source 14 is aligned.

## Claims

1. A vehicle directional antenna alignment system comprising:

   a vehicle (12);

   a device for determining alignment of an antenna (14) located in said vehicle, said device comprising:

   a directional radar antenna (14) located in said vehicle generating a radiated signal;

   said device **characterized by**

   a first receiving antenna (16) located a first distance from said directional radar antenna and receiving said radiated signal having a first phase and a first amplitude;

   a second receiving antenna (18) located a second distance from said directional radar antenna and a third distance from said first receiving antenna, said second receiving antenna receiving said radiated signal having a second phase and a second amplitude; and

   a controller (22) coupled to said first and second receiving antennas, said controller having control logic operative to determine a phase difference between said first phase and said second phase and an amplitude difference between said first amplitude and said second amplitude.

2. The vehicle directional antenna alignment system as recited in claim 1 further comprising an alignment mark (20), whereby said vehicle is approximately centered between said first and second receiving antennas when positioned on said mark.

3. The device for determining alignment of an antenna as recited in claim 1, wherein said directional radar antenna is coupled to an adjusting device (24), said adjusting device also coupled to said controller, said controller having control logic operative to control said adjusting device to adjust said directional radar antenna until said first phase equals said second phase and said first amplitude equals said second amplitude.

4. The device for determining alignment of an antenna as recited in claim 1, wherein said first and second receiving antennas are mounted horizontally.

5. The device for determining alignment of an antenna as recited in claim 1, wherein said first and second receiving antennas are mounted vertically.

6. The device for determining alignment of an antenna as recited in claim 1, further comprising:

   a third receiving antenna (26) located a forth distance from said directional radar antenna and a fifth distance from said first receiving antenna, said third receiving antenna receiving said radiated signal having a third phase and a third amplitude; and

said controller coupled to said third receiving antenna, said controller having control logic operative to determine a phase difference between said first phase and said third phase and an amplitude difference between said first amplitude and said third amplitude.

7. The device for determining alignment of an antenna as recited in claim 1, wherein said first and third receiving antennas are mounted horizontally.

8. The device for determining alignment of an antenna as recited in claim 1, wherein said first and third receiving antennas are mounted vertically.

9. The device for determining alignment of an antenna as recited in claim 1, wherein said first and second distances are larger then said third distance.

10. A method for determining alignment of a directional antenna on a vehicle **characterized by** the steps of:

   positioning a vehicle (12) approximately centered between a first receiving antenna (16) and a second receiving antenna (18);

   generating a radiated signal using a radiating energy source (14);

   receiving said radiated signal with a first phase and a first amplitude at said first receiving antenna;

   receiving said radiated signal with a second phase and a second amplitude at said second receiving antenna;

   determining a phase difference between said first phase and said second phase and an amplitude difference between said first amplitude and said second amplitude; and

   adjusting said radiating energy source until said first phase equals said second phase and said first amplitude equals said second amplitude.

**Revendications**

1. Système d'alignement d'antenne directionnelle de véhicule comprenant :

   un véhicule (12),
   un dispositif destiné à déterminer l'alignement d'une antenne (14) située dans ledit véhicule, ledit dispositif comprenant :

      une antenne de radar directionnelle (14) située dans ledit véhicule générant un signal rayonné,
      ledit dispositif étant **caractérisé par** :

         une première antenne réceptrice (16) située à une première distance de ladite antenne de radar directionnelle et recevant ledit signal rayonné présentant une première phase et une première amplitude,
         une seconde antenne de réception (18) située à une seconde distance de ladite antenne de radar directionnelle et à une troisième distance de ladite première antenne réceptrice, ladite seconde antenne réceptrice recevant ledit signal rayonné présentant une seconde phase et une seconde amplitude, et
         un contrôleur (22) relié auxdites première et seconde antennes réceptrices, ledit contrôleur comportant une logique de commande fonctionnant pour déterminer une différence de phase entre ladite première phase et ladite seconde phase et une différence d'amplitude entre ladite première amplitude et ladite seconde amplitude.

2. Système d'alignement d'antenne directionnelle de véhicule tel que décrit dans la revendication 1 comprenant en outre un repère d'alignement (20), grâce à quoi ledit véhicule est approximativement centré entre lesdites première et seconde antennes réceptrices quand il est positionné sur ledit repère.

3. Dispositif destiné à déterminer l'alignement d'une antenne, tel que décrit dans la revendication 1, dans lequel ladite antenne de radar directionnelle est reliée à un dispositif d'ajustement (24), ledit dispositif d'ajustement étant également relié audit contrôleur, ledit contrôleur ayant une logique de commande fonctionnant pour commander ledit dispositif d'ajustement pour régler ladite antenne de radar directionnelle jusqu'à ce que ladite première phase soit égale à ladite seconde phase et ladite première amplitude soit égale à ladite seconde amplitude.

4. Dispositif destiné à déterminer l'alignement d'une antenne, tel que décrit dans la revendication 1, dans lequel lesdites première et seconde antennes réceptrices sont montées horizontalement

**5.** Dispositif destiné à déterminer l'alignement d'une antenne, tel que décrit dans la revendication 1, dans lequel lesdites première et seconde antennes réceptrices sont montées verticalement.

**6.** Dispositif destiné à déterminer l'alignement d'une antenne, tel que décrit dans la revendication 1, comprenant en outre :

une troisième antenne réceptrice (26) située à une quatrième distance de ladite antenne de radar directionnelle et à une cinquième distance de ladite première antenne réceptrice, ladite troisième antenne réceptrice recevant ledit signal rayonné présentant une troisième phase et une troisième amplitude, et

ledit contrôleur relié à ladite troisième antenne réceptrice, ledit contrôleur ayant une logique de commande fonctionnant pour déterminer une différence de phase entre ladite première phase et ladite troisième phase et une différence d'amplitude entre ladite première amplitude et ladite troisième amplitude.

**7.** Dispositif pour déterminer l'alignement d'une antenne, tel que décrit dans la revendication 1, dans lequel lesdites première et troisième antennes réceptrices sont montées horizontalement.

**8.** Dispositif destiné à déterminer l'alignement d'une antenne, tel que décrit dans la revendication 1, dans lequel lesdites première et troisième antennes réceptrices sont montées verticalement.

**9.** Dispositif destiné à déterminer l'alignement d'une antenne, tel que décrit dans la revendication 1, dans lequel lesdites première et seconde distances sont plus grandes que ladite troisième distance

**10.** Procédé destiné à déterminer l'alignement d'une antenne directionnelle sur un véhicule **caractérisé par** les étapes consistant à :

positionner un véhicule (12) approximativement centré entre une première antenne réceptrice (16) et une seconde antenne réceptrice (18),

générer un signal rayonné en utilisant une source d'énergie de rayonnement (14),

recevoir ledit signal rayonné présentant une première phase et une première amplitude au niveau de ladite première antenne réceptrice,

recevoir ledit signal rayonné présentant une seconde phase et une seconde amplitude au niveau de ladite seconde antenne réceptrice,

déterminer une différence de phase entre ladite première phase et ladite seconde phase et une différence d'amplitude entre ladite première amplitude et ladite seconde amplitude, et

régler ladite source d'énergie de rayonnement jusqu'à ce que ladite première phase soit égale à ladite seconde phase et jusqu'à ce que ladite première amplitude soit égale à ladite seconde amplitude.

**Patentansprüche**

**1.** Fahrzeug-Richtantennen-Ausrichtungssystem, umfassend:

ein Fahrzeug (12);

eine Vorrichtung zum Bestimmen der Ausrichtung einer Antenne (14), welche in dem Fahrzeug angeordnet ist, wobei die Vorrichtung umfasst:

eine Radarrichtantenne (14), welche in dem Fahrzeug angeordnet ist und ein Abstrahlsignal erzeugt;

wobei die Vorrichtung **gekennzeichnet ist durch** eine erste Empfangsantenne (16), die in einer ersten Entfernung von der Radarrichtantenne angeordnet ist und das Abstrahlsignal, das eine erste Phase und eine erste Amplitude aufweist, empfängt;

eine zweite Empfangsantenne (18), die in einer zweiten Entfernung von der Radarrichtantenne und in einer dritten Entfernung von der ersten Empfangsantenne angeordnet ist, wobei die zweite Empfangsantenne das Abstrahlsignal, das eine zweite Phase und eine zweite Amplitude aufweist; empfängt; und

eine Steuerung (22), die an die erste und die zweite Empfangsantenne angekoppelt ist, wobei die Steuerung eine Steuerlogik aufweist, welche in der Lage ist, eine Phasendifferenz zwischen der ersten Phase und der zweite Phase und eine Amplitudendifferenz zwischen der ersten Amplitude und der zweiten Amplitude zu ermitteln.

**2.** Fahrzeug-Richtantennen-Ausrichtungssystem nach Anspruch 1, weiterhin umfassend eine Aushchtungsmarke (20), wobei das Fahrzeug annähernd zwischen der ersten und der zweiten Empfangsantenne zentriert ist, wenn es auf der Marke positioniert ist.

**3.** Vorrichtung zum Bestimmen der Ausrichtung einer Antenne nach Anspruch 1, wobei die Radarrichtantenne an eine Einstellvorrichtung (24) angekoppelt ist, wobei die Einstellvorrichtung ebenfalls an die Steuerung angekoppelt ist, wobei die Steuerung eine Steuerlogik aufweist, welche in der Lage ist, die Einstellvorrichtung zu steuern, um die Radarrichtantenne einzustellen, bis die erste Phase gleich der zweiten Phase und die erste Amplitude gleich der zweiten Amplitude ist.

4. Vorrichtung zum Bestimmen der Ausrichtung einer Antenne nach Anspruch 1, wobei die erste und die zweite Empfangsantenne horizontal angebracht sind.

5. Vorrichtung zum Bestimmen der Ausrichtung einer Antenne nach Anspruch I, wobei die erste und die zweite Empfangsantenne vertikal angebracht sind.

6. Vorrichtung zum Bestimmen der Ausrichtung einer Antenne nach Anspruch 1, weiterhin umfassend:

   eine dritte Empfangsantenne (26), die in einer vierten Entfernung von der Radarrichtantenne und in einer fünften Entfernung von der ersten Empfangsantenne angeordnet ist, wobei die dritte Empfangsantenne das Abstrahlsignal, das eine dritte Phase und eine dritte Amplitude aufweist, empfängt; und

   wobei die Steuerung an die dritte Empfangsantenne angekoppelt ist, wobei die Steuerung eine Steuerlogik aufweist, welche in der Lage ist, eine Phasendifferenz zwischen der ersten Phase und der dritten Phase und eine Amplitudendifferenz zwischen der ersten Amplitude und der dritten Amplitude zu ermitteln.

7. Vorrichtung zum Bestimmen der Ausrichtung einer Antenne nach Anspruch 1, wobei die erste und die dritte Empfangsantenne horizontal angebracht sind.

8. Vorrichtung zum Bestimmen der Ausrichtung einer Antenne nach Anspruch 1, wobei die erste und die dritte Empfangsantenne vertikal angebracht sind.

9. Vorrichtung zum Bestimmen der Ausrichtung einer Antenne nach Anspruch 1, wobei die erste und die zweite Entfernung größer als die dritte Entfernung sind.

10. Verfahren zum Bestimmen der Ausrichtung einer Richtantenne an einem Fahrzeug, **gekennzeichnet durch** folgende Schritte:

    Positionieren eines Fahrzeugs (12) annahemd zentriert zwischen einer ersten Empfangsantenne (16) und einer zweiten Empfangsantenne (18);
    Erzeugen eines Abstrahlsignals mittels einer Abstrahlenergiequelle (14);
    Empfangen des Abstrahlsignals mit einer ersten Phase und einer ersten Amplitude an der ersten Empfangsantenne;
Empfangen des Abstrahlsignals mit einer zweiten Phase und einer zweiten Amplitude an der zweiten Empfangsantenne;
Ermitteln einer Phasendifferenz zwischen der ersten Phase und der zweiten Phase und einer Amplitudendifferenz zwischen der ersten Amplitude und der zweiten Amplitude; und
Einstellen der Abstrahlenergiequelle, bis die erste Phase gleich der zweiten Phase und die erste Amplitude gleich der zweiten Amplitude ist.

FIG.1

FIG.2

FIG.3